# EUROPEAN PATENT SPECIFICATION

(11) **EP 1 258 271 B1**
(45) Date of publication and mention of the grant of the patent: **22.10.2008**
(21) Application number: 00927254.3
(22) Date of filing: 16.05.2000
(51) Int. Cl.: A63F 9/18, H04Q 7/22

(54) **SYSTEM FOR MANAGING TELEPHONE MESSAGE TEXTS FOR THE EVALUATION OF CONTESTS**
SYSTEM UND VERARBEITUNG VON TELEPHONNACHRICHTENTEXTEN ZUR AUSWERTUNG VON WETTBEWERBEN
SYSTEME DE GESTION DE MESSAGES DE TEXTE EN TELEPHONIE PERMETTANT L'EVALUATION DE CONCOURS

(30) Priority: 25.02.2000 ES 200000451
(43) Date of publication of application: 20.11.2002
(73) Proprietor: Ibanez Ballesteros, Joaquin, 03540 Cabo de las Huertas (ES)
(72) Inventor: Ibanez Ballesteros, Joaquin, 03540 Cabo de las Huertas (ES)
(74) Representative: De Verdonces Llargués, Enrique
(86) International application number: PCT/ES2000/000180
(87) International publication number: WO 2001/062358

(56) References cited:
- WO-A1-98/09451
- WO-A1-99/42964

## Description

A system for managing telephone text messages for evaluating contests.

### TECHNICAL FIELD OF THE INVENTION

The present invention describes a management and evaluation system of mobile telephone text messages which comprises a telephone terminal, a computer and a suitable interface between the previous elements, aimed mainly at the leisure market. The computer has a contestant data base and in turn executes a programme that controls the rules for participating, the format of the message to be sent, the validation key codes for the answers and the prizes or rewards to be shared out.

### STATE OF THE ART

The developments in telecommunications and computing have been useful in a broad range of technological fields, for example in the medical, financial and economic fields, having developed systems that contain interfaces, databases and/or computer programmes.

Among the documents that make up the state of the art closest to the invention is US Patent 5,596,994 which describes a system in which a user send a series of motivational messages and/or questions to a client in order to introduce a specific behavioural problem. The system consists of a client database, which for each client includes the name, list of calls and a personal identification and a client programme that includes unique motivational messages and/or questions for each client. The database and the programme are operated by a computer which in pre-selected time periods sends signals to a client telephone device by means of a converter and a network, but this system does not use mobile telephone text messages.

Document WO 99/42964 discloses a game system in which a plurality of subscribers transmit game data to a central game unit in order to participate in one game via short specific messages using mobile telephone devices. A SIM-card is used for displaying commands and game results to the subscriber on the screen of their mobile telephone device. According to the disclosure, every subscriber play a different game.

Finally, document WO 98/09451 describes a method and a system for sending messages and for the processing of the received answers to the messages sent, the method being oriented to make a quick and local opinion call.

It is known that one of the priorities of the media, such as television, radio, press and consumer means is to gain clients by means of contests or challenges. A communication medium sets questions or challenges through its medium reaching a broad population sector. Those people who want to take part in the challenge have to send their answer, which has to be assessed in order to gain access to the reward or prize. The communication between the broadcasting body and the contestant is done by mail, telephone conversation, video conference provided that there is a presenter in all cases or a jury who assess the correct answers and award the prizes or rewards.

By means of the automated management of the mobile telephone text messages it is possible to take part in the different challenges that have been set, obtaining a quick response and without the need of a jury, producing a more flexible flow of questions and answers, just using a mobile telephone.

The use of mobile telephone text messages makes the system a universal method for any contest, just by changing the coding or format of the mobile telephone message and the contest parameters (participation rules, correct answers and prizes).

### OBJECTIVE OF THE INVENTION

An automatic management system of mobile telephone text messages which comprises a telephone terminal, a computer and a suitable interface between the previous elements, aimed mainly at the leisure market. The computer has a contestant data base with the messages received and sent and in turn executes a programme that controls the rules for participating, the format of the message to be sent, the validation key codes for the answers and the prizes or rewards to be shared out makes it a highly iterative system in which the participant can receive a quick answer.

### DETAILED DESCRIPTION OF THE INVENTION

The management system of mobile telephone text messages is composed of a mobile telephone terminal which must be capable of receiving text messages, preferably the SMS (Short Message System), although any other text messenger service can be used, a computer containing a data base and which executes a programme controlling the rules of participation, the format of the message to be sent, the validation key codes for the answers and the prizes or rewards to be shared out and a suitable interface between the computer and the telephone terminal. The management system sends a reply message through the telephone terminal using the same medium as the message received.

First of all, the broadcasting company sets questions through the medium reaching a broad sector of the population. The people who want to take part send their reply in mobile telephone text message form to a specified telephone number. The management system sets up the communication with the telephonic terminal using the interface. The telephone terminal receives the messages in date and arrival time order, respecting the priority of the dispatch, differentiating them by the transmitter station telephone number and registering them in a data base. The computer assesses the content of the message and contrasts the possible correct answers, which have been defined by the broadcasting medium. The correct messages can opt for prizes and the system answers them using a telephone text message. The interface of the telephone message call management system can be, preferably, a MODEM or Data Card and uses a related data base for registering the data. The data bases can be any that are capable of taking ODBC and OLE (Access, SQL server, FoxPro, etc.), storing the messages received and sent in the data base and taking into account:
- Telephone number of the message transmitter.
- Date and arrival time.
- Message data.
- Coding and message format.

The computer programme that executes the system is composed of:
- The rules of participation.
- The message format to be sent.
- The answer validation keys and/or codes.
- Correct replies.
- Prizes and rewards.

The computer programme can be developed in any operating system, the Microsoft Windows system (95, 98 NT and later versions) being preferred, using components of the Visual C++ and Visual Basic because of its more widespread use.

The invention is described below with the help of different examples which do not restrict the scope of the same.
**Example 1.** It describes the flow chart of the system 30 containing the procedure of the management of mobile telephone message texts.
   1. Start the modem of the mobile telephone terminal and execute AT commands.
   2. Read the data base parameters.
   3. Loop in order to understand the arrival of the new SMS message at the terminal.
   4. Check the validity of the SMS (length, tele phone number, etc.).
   5. If the SMS is valid, it checks whether the data coincides with the pre-defined answers.
   6. Immediate reply by the same route to the client/contestant with a code if entitled to a product/prize.
**Example 2.** It describes the files contained in the computer programme of the mobile telephone texts management system. The computer programme contains the following files:
   - Dialer.frm
   - Dialer.frx
   - FrProgram.frm
   - FrProgram.frx
   - Modulel.bas
   - De.dsr
   - Dialer.vpp

## Claims

1. A system for evaluating contests through the management, reception, evaluation and response of mobile telephone text messages, the system comprising a telephone terminal capable of receiving and transmitting mobile telephone messages **characterised in that** the system further comprises an audiovisual medium reaching a broad sector of the population, a computer containing a data base and a suitable interface to transfer data between the computer and the telephone terminal, and **in that** the computer includes means to:
a) receive incoming telephone text messages from mobile telephones through the telephone terminal, such messages being susceptible to contain a specific data code and a message data as an answer to a question set through by the audiovisual medium;
b) dispatch and register the incoming telephone messages in the computer data base, and also associated data referring to the telephone number of the message transmitter, date and arrival time and coding and message format;
c) check whether the data code and message format contained in every message coincide with a pre-defined condition and whether the sender of the message associated to this data is entitled to a product or prize; and to
d) send a reply message through the telephone terminal with a code that depends on the coincidences mentioned on point c).

2. A method for carrying out games, such as a contest, in which a computer is connected to a telephone terminal capable of receiving and transmitting telephone messages, **characterized in that** the method comprises the step of setting questions through an audiovisual medium reaching a broad sector of the population, and the computer has programmed means containing a program through which the following steps are executed:
a) receiving participant incoming telephone text messages through the telephone terminal;
b) dispatching and registering the incoming telephone messages and also associated data referring to the telephone number of message transmitter, date and arrival time and coding and message format, in a computer data base;
c) checking whether the data code and message format contained in every message coincide with a predefined condition and whether the sender of the message associated to this data is entitled to a product or prize; and
d) sending a reply message through the telephone terminal with a code that depends on the coincidences mentioned on point c).

## Patentansprüche

1. System zur Wettbewerbsauswertung durch die Verwaltung, Empfang, Auswertung und Beantwortung von mobiltelefonischen Textnachrichten, wobei das System ein Telefonendgerät umfasst, das mobiltelefonische Nachrichten empfangen und übermitteln kann, **dadurch gekennzeichnet, dass** das System desweiteren ein audiovisuelles Medium, das einen breiten Sektor der Bevölkerung erreicht, einen Computer, der eine Datenbank und eine geeignete Schnittstelle zur Datenübertragung zwischen dem Computer und dem Telefonendgerät enthält, umfasst, und dass der Computer Mittel beinhaltet zum:
a) Empfangen eingehender telefonischer Textnachrichten von Mobiltelefonen durch das Telefonendgerät, wobei derartige Nachrichten eine spezifische Datencodierung und Benachrichtigungsdaten als Antwort auf eine durch das audiovisuelle Medium gestellte Frage enthalten können;
b) Versenden und Eintragen der eingehenden telefonischen Nachrichten in der Computerdatenbank, und auch der zugeordneten Daten bezüglich der Telefonnummer des Nachrichtenübermittlers, Datum und Ankunftszeit und Codierung und Nachrichtenformat;
c) Überprüfen, ob die in jeder Nachricht enthaltene Datencodierung und das Nachrichtenformat mit einer vorbestimmten Bedingung übereinstimmen, und ob der Versender der dieser Daten zugeordneten Nachricht zu einem Produkt oder Preis berechtigt ist; und zum
d) Senden einer Beantwortungsnachricht durch das Telefonendgerät mit einem Code, abhängig von den in Punkt c) erwähnten Übereinstimmungen.

2. Verfahren zum Ausführen von Spielen, wie Wettbewerben, in welchen ein Computer an ein Telefonendgerät angeschlossen ist, das telefonische Nachrichten empfangen und übermitteln kann, **dadurch gekennzeichnet, dass** das Verfahren den Schritt von Fragestellungen durch ein audiovisuelles Medium umfasst, wobei ein breiter Sektor der Bevölkerung erreicht wird, und dass der Computer programmierte Medien hat, die ein Programm enthalten, durch welches die folgenden Schritte ausgeführt werden:
a) Empfangen teilnehmender eingehender telefonischer Textnachrichten durch das Telefonendgerät;
b) Versenden und Eintragen in einer Computerdatenbank der eingehenden telefonischen Nachrichten und auch der zugeordneten Daten bezüglich der Telefonnummer des Nachrichtenübermittlers, Datum und Ankunftszeit und Codierung und Nachrichtenformat;
c) Überprüfen, ob die in jeder Nachricht enthaltene Datencodierung und das Nachrichtenformat mit einer vorbestimmten Bedingung übereinstimmen, und ob der Versender der diesen Daten zugeordneten Nachricht zu einem Produkt oder Preis berechtigt ist; und zum
d) Senden einer Beantwortungsnachricht durch das Telefonendgerät mit einem Code, abhängig von den in Punkt c) erwähnten Übereinstimmungen.

## Revendications

1. Système pour l'évaluation de concours à travers la gestion, la réception, l'évaluation et la réponse à des messages textuels de téléphone mobile, le système comprenant un terminal téléphonique capable de recevoir et de transmettre des messages de téléphone mobile **caractérisé en ce que** le système comprend de plus un média audiovisuel atteignant un large secteur de population, un ordinateur contenant une base de données et une interface appropriée pour transférer les données entre l'ordinateur et le terminal téléphonique, et **en ce que** l'ordinateur comprend des moyens pour:
a) recevoir les messages textuels téléphoniques entrants depuis des téléphones mobiles à travers le terminal téléphonique, de tels messages étant susceptibles de contenir un code de données spécifique et des données de message comme réponse à une question posée à travers le média audiovisuel ;
b) envoyer et enregistrer les messages téléphonique entrants dans la base de données informatique ainsi que les données associées concernant le numéro de téléphone de l'émetteur du message, la date et l'heure d'arrivée et le format du message et codage ;
c) vérifier si le code de données et le format du message contenus dans chaque message coïncide avec une condition prédéfinie et si l'expéditeur du message associé à ces données a droit à un produit ou à un prix ; et pour
d) envoyer un message de réponse à travers le terminal téléphonique avec un code dépendant des coïncidences mentionnées au point c).

2. Méthode pour mettre en oeuvre des jeux, comme des concours, dans lequel un ordinateur est connecté à un terminal téléphonique capable de recevoir et de transmettre des messages téléphoniques, **caractérisé en ce que** la méthode comprend l'étape consistant à poser des questions à travers un média audiovisuel atteignant un large secteur de population et l'ordinateur possède des moyens programmés contenant un programme à travers lequel les étapes suivantes sont exécutées :
a) réception des messages textuels entrants des participants à travers le terminal téléphonique ;
b) l'envoi et l'enregistrement des messages téléphoniques entrants ainsi que les données associées concernant le numéro de téléphone de l'émetteur du message, la date et l'heure d'arrivée et le format de message et codage dans une base de données informatique;
c) la vérification de la coïncidence du code de données et du format du message dans chaque message avec une condition prédéfinie et du droit de l'expéditeur du message associé a ces données à un produit ou à un prix ; et
d) l'envoi d'un message de réponse à travers le terminal téléphonique avec un code dépendant des coïncidences mentionnées au point c).
